# EUROPÄISCHE PATENTSCHRIFT

(11) **EP 2 124 306 B1**
(45) Veröffentlichungstag und Bekanntmachung des Hinweises auf die Patenterteilung: **06.07.2016**
(21) Anmeldenummer: 09006257.1
(22) Anmeldetag: 08.05.2009
(51) Int. Cl.: H02B 13/035

(54) **Elektrische Schalteinheit für eine elektrische Schaltanlage insbesondere für den Bereich der Mittelspannung**
Electrical switching unit for an electrical switching assembly, in particular for medium voltage
Unité de commutation électrique pour une installation de commutation électrique notamment pour le domaine de la moyenne tension

(30) Priorität: 19.05.2008 DE 102008024142
(43) Veröffentlichungstag der Anmeldung: 25.11.2009
(73) Patentinhaber: Schneider Electric Sachsenwerk GmbH, 93055 Regensburg (DE)
(72) Erfinder: Zimmerer, Rudolf, 93192 Wald (DE)
(74) Vertreter: DREISS Patentanwälte PartG mbB

(56) Entgegenhaltungen:
- DE-A1- 19 850 430
- JP-A- 60 005 711
- JP-K1- S 605 711

## Beschreibung

Die Erfindung betrifft eine elektrische Schalteinheit für eine elektrische Schaltanlage insbesondere für den Bereich der Mittelspannung.

Eine Mittelspannungsschaltanlage besteht üblicherweise aus einer Mehrzahl von nebeneinander angeordneten elektrischen Schalteinheiten, wobei die einzelnen Schalteinheiten jeweils mehrere zumeist übereinander angeordnete Funktionsmodule aufweisen. So sind häufig in einem oberen Bereich einer Schalteinheit eine Mehrzahl von Sammelschienen angeordnet, während ein mittlerer Bereich mit elektrischen Schaltgeräten, beispielsweise Trenn- oder Leistungsschaltern versehen ist. In einem unteren Bereich der Schalteinheit sind dann Steckerbuchsen vorgesehen, über die nach unten in einen Kanal abgehende Kabel angeschlossen werden können. Häufig sind in diesem unteren Bereich auch Steckerbuchsen vorhanden, um jeweils einen Spannungswandler mit den Phasen der Schalteinheit zu verbinden. Insbesondere für das Anschließen oder Abtrennen eines derartigen Spannungswandlers von einer Sammelschiene ist es erforderlich, dass der Spannungswandleranschluss geerdet werden kann. Beispielhaft wird hierzu auf die DE 42 33 986 A1 verwiesen.

JP 60 005711 A offenbart eine gasisolierte Schaltanlage, bei der eine innerhalb eines Zwischenkontaktstücks angeordneten Zahnstange zwischen einem Erdungskontaktstück und einem feststehenden Trennerkontakt hin und her bewegbar ist. Das Zwischenkontaktstück ist mit einem Leiter mit einem Messapparat verbunden.

DE 198 50 431 A1 offenbart einen Kapselungsabschnitt einer gasisolierten Hochspannungsschaltanlage. Ein Schaltelement ist mit einer Bohrung zur Aufnahme einer Anlenkbuchse für einen Schalthebel und mit einem Schlitz zum Durchgriff dieses Schalthebels versehen. Das Schaltelement ist mithilfe des Hebels antreibbar, der mit seinem bewegbaren Ende über eine Anlenkbuchse mit dem Schaltelement bewegbar verbunden ist und auf einer Schaltwelle angeordnet ist.

Aufgabe der Erfindung ist es, eine Schalteinheit für eine Mittelspannungsschaltanlage zu schaffen, die mit geringem Aufwand eine sichere Erdung eines Spannungswandleranschlusses ermöglicht.

Die Erfindung löst diese Aufgabe durch eine Schalteinheit nach dem Anspruch 1.

Erfindungsgemäß ist eine Kontaktschiene vorgesehen, die in einem mit dem Spannungswandleranschluss verbundenen Führungsteil geführt ist. Die Kontaktschiene kann in eine erste Stellung, in der sie mit der Sammelschiene verbunden ist, und in eine zweite Stellung, in der sie mit dem geerdeten Gehäuse verbunden ist, verschoben werden.

Ein wesentlicher Vorteil der Erfindung besteht darin, dass durch die Verschiebbarkeit der Kontaktschiene eine sehr raumsparende Konstruktion erreicht wird. Die für die Erdung des Spannungswandleranschlusses erforderlichen Komponenten benötigen damit nur sehr wenig Raum in dem Gehäuse der Schalteinheit. Dies vermindert das Bauvolumen und damit auch die Kosten der Schalteinheit.

Bei einer vorteilhaften Weiterbildung der Erfindung weist das Führungsteil zwei Öffnungen auf, deren Querschnitte im wesentlichen dem Querschnitt der Kontaktschiene entsprechen, so dass die Kontaktschiene in den beiden Öffnungen verschiebbar ist. Auf diese Weise wird erreicht, dass die Kontaktschiene mit einfachen Mitteln aber trotzdem sehr genau von dem Führungsteil geführt werden kann.

Bei einer weiteren besonders vorteilhaften Weiterbildung der Erfindung sind die Querschnitte der beiden Öffnungen zumindest teilweise etwas größer ausgestaltet als dies für eine Verschiebbarkeit der Kontaktschiene an sich erforderlich ist, so dass ein Spielraum zwischen der Kontaktschiene und den Öffnungen entsteht. Dieser Spielraum wird dann dazu benutzt, um eine bleibende und damit sichere elektrische Verbindung der Kontaktschiene zu der Sammelschiene und nach Erde herzustellen.

Eine weitere vorteilhafte Ausbildung der Erfindung besteht darin, dass die Kontaktschiene von einer Blattfeder gegen die Ränder der Öffnungen gedrückt wird. Auf diese Grundlage ist es besonders zweckmäßig, wenn die Kontaktschiene in der ersten Stellung von der Sammelschiene gegen die Kraft der Blattfeder von einem der beiden Ränder der Öffnungen weggedrückt wird, und wenn die Kontaktschiene in der zweiten Stellung von einem an dem Gehäuse gehaltenen Kontaktstück gegen die Kraft der Blattfeder von dem anderen der beiden Ränder der Öffnungen weggedrückt wird. Durch diese Maßnahmen wird eine bleibende elektrische Verbindung zwischen der Kontaktschiene und der Sammelschiene einerseits und der Kontaktschiene und dem geerdeten Gehäuse andererseits erreicht.

Bei einer weiteren vorteilhaften Weiterbildung der Erfindung weist die Kontaktschiene eine Öffnung auf, durch die ein Betätigungshebel hindurch ragt, der um eine Achse schwenkbar ist. Mit Hilfe dieser einfachen Maßnahme ist es möglich, die Kontaktschiene durch ein Schwenken des Betätigungshebels zwischen ihrer ersten und zweiten Stellung hin- und herzuschieben.

Besonders vorteilhaft ist es, wenn der Betätigungshebel aus einem nicht-leitfähigem Material besteht. Damit ist es möglich, dass eine Bedienperson mit Hilfe des Betätigungshebel die Kontaktschiene hin- und herschiebt.

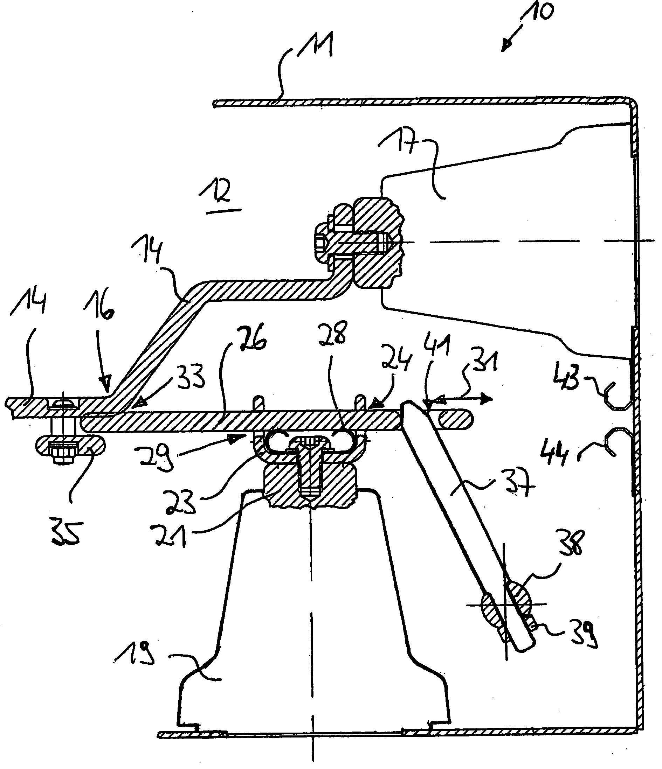

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Die einzige Figur der Zeichnung zeigt einen schematischen Querschnitt durch ein Ausführungsbeispiel einer erfindungsgemäßen elektrischen Schalteinheit einer Mittelspannungsschaltanlage.

Eine Schaltanlage im Bereich der Mittelspannung ist üblicherweise aus mehreren nebeneinander angeordneten Schalteinheiten aufgebaut. Jede der Schalteinheiten weist dabei mehrere Funktionsmodule auf, die zumeist übereinander angeordnet sind. Bei einem dieser Funktionsmodule, das vorzugsweise in einem unteren Bereich der Schalteinheit angeordnet ist, kann es sich um einen sogenannten Kabelabgang handeln. Innerhalb dieses Kabelabgangs sind eine Mehrzahl von Steckerbuchsen untergebracht, an die Kabel angeschlossen werden können. Die Kabel gehen dann häufig nach unten in einen unterhalb der Schalteinheit verlaufenden Kanal ab.

In der Figur ist ein Ausschnitt aus einem Kabelabgang 10 einer elektrischen Schalteinheit dargestellt. Der Kabelabgang 10 weist ein Gehäuse 11 auf, das in der Figur nur teilweise gezeigt ist. Das Gehäuse 11 ist geerdet und bildet einen gasdichten Innenraum 12, der mit einem Isoliergas, insbesondere mit SF6 gefüllt ist. In dem Innenraum 12 sind eine Mehrzahl von den Phasen der Schalteinheit zugehörigen Komponenten untergebracht. In der Figur sind jedoch nur die zu einer der Phasen zugeordneten Komponenten gezeigt. Die nachfolgenden Erläuterungen dieser Komponenten gelten daher in entsprechender Weise immer für alle Phasen der Schalteinheit.

Im Innenraum 12 des Kabelabgangs 10 ist eine Sammelschiene 14 untergebracht, die in nicht-dargestellter Weise mit einer der Phasen der Schalteinheit verbunden ist. In ebenfalls nicht-dargestellter Weise ist diese Sammelschiene 14 mit einer oder mehreren Steckerbuchsen verbunden, in die elektrische Kabel von außen eingesteckt werden können. Über diese Steckerbuchsen kann die Schalteinheit somit mit externen Einrichtungen verbunden werden.

Über eine Abwinklung 16 ist die Sammelschiene 14 mit einem im Innenraum 12 untergebrachten Prüfanschluss 17 verbunden. Dieser Prüfanschluss 17 kann beispielsweise als handelsübliche Innenkonus-Steckerbuchse realisiert sein. Gemäß der Figur ist der Prüfanschluss 17 im vorliegenden Ausführungsbeispiel in einer vertikalen Außenwand des Gehäuses 11 gehalten, so dass er dort von außen zugänglich ist, und dass ein Prüfstecker in etwa horizontaler Richtung in den Prüfanschluss 17 eingesteckt werden kann.

Die elektrische Verbindung der Sammelschiene 14 und des Prüfanschlusses 17 ist nicht trennbar, so dass an dem Prüfanschluss andauernd die an der Sammelschiene 14 anliegende Phasenspannung abgreifbar ist. Der Prüfanschluss 17 kann daher zur Überprüfung der an den zugehörigen abgehenden Kabeln vorhandenen Phasenspannung verwendet werden.

Benachbart zu dem Prüfanschluss 17 ist im Innenraum 12 des Kabelabgangs 10 ein Spannungswandleranschluss 19 angeordnet. Dieser Spannungswandleranschluss 19 kann beispielsweise als handelsübliche Innenkonus-Steckerbuchse realisiert sein. Gemäß der Figur ist der Spannungswandleranschluss 19 im vorliegenden Ausführungsbeispiel in einer horizontalen Bodenwand des Gehäuses 11 gehalten, so dass er dort von unten zugänglich ist, und dass ein Spannungswandler in etwa vertikaler Richtung eingesteckt werden kann.

Der Spannungswandleranschluss 19 weist an seinem im Innenraum 12 befindlichen und seinem Zugang entgegengesetzten Ende einen elektrischen Kontakt 21 auf, der fest mit einem elektrisch leitfähigen Führungsteil 23 verbunden ist. Das Führungsteil 23 ist etwa U-förmig ausgebildet. Mit dem Verbindungssteg seiner beiden Schenkel liegt das Führungsteil 23 flächig an dem elektrischen Kontakt 21 an und ist auch dort mit diesem Kontakt 21 verschraubt.

In jedem der beiden Schenkel ist eine Öffnung 24 enthalten, durch die eine Kontaktschiene 26 hindurch gesteckt ist. Die Kontaktschiene 26 ist länglich ausgebildet und weist einen im wesentlichen gleichbleibenden Querschnitt auf. Dieser Querschnitt ist insbesondere kreisförmig oder oval ausgebildet. Die Kontaktschiene 26 und das Führungsteil 23 weisen eine (in die Tiefe der dargestellten Figur sich erstreckende) Breite auf, die etwa der (sich in derselben Richtung erstreckenden) Breite der Sammelschiene 14 entspricht.

Die Querschnitte der Öffnungen 24 in den beiden Schenkeln des Führungsteils 23 entsprechen im wesentlichen dem Querschnitt der Kontaktschiene 26, so dass die Kontaktschiene 26 in den Öffnungen 24 zwischen einer ersten und einer zweiten Stellung hin- und herschiebbar ist. Im Wesentlichen sind die Querschnitte der beiden Öffnungen 24 geringfügig größer ausgebildet als der Querschnitt der Kontaktschiene 26. Die Kontaktschiene 26 wird dadurch bei einem Hin- und Herschieben von den Öffnungen 24 des Führungsteils 23 geführt.

Zusätzlich zu dieser Verschiebbarkeit der Kontaktschiene 26 weisen die Querschnitte der beiden Öffnungen 24 jedoch die folgende Abweichung von dem Querschnitt der Kontaktschiene 26 auf.

In Richtung der beiden Schenkel des Führungsteils 23 sind die Querschnitte der beiden Öffnungen 24 etwas größer ausgestaltet als dies für eine Verschiebbarkeit der Kontaktschiene 26 an sich erforderlich ist. Damit entsteht ein Spielraum zwischen der Kontaktschiene 26 und den Öffnungen 24 des Führungsteils 23. Die Kontaktschiene 26 kann damit im vorliegenden Ausführungsbeispiel in Richtung der beiden Schenkel des Führungsteils 23 etwas nach unten und oben bewegt werden.

Gemäß der Figur ist nunmehr zwischen den beiden Schenkeln des Führungsteils 23 und der Kontaktschiene 26 eine Blattfeder 28 vorhanden. Die Blattfeder 28 besteht aus Metall und ist zusammen mit dem Führungsteil 23 an dem elektrischen Kontakt 21 des Spannungswandleranschlusses 19 gehalten. Die Blattfeder 28 weist einen im Grundsatz U-förmigen Querschnitt auf, dessen beide Schenkel jedoch halbkreisförmig nach innen abgebogen sind.

Die Blattfeder 28 liegt damit mit ihrem die beiden abgebogenen Schenkel verbindenden Steg flächig an dem Steg des Führungsteils 23 an. Mit den freien Enden ihrer beiden abgebogenen Schenkel liegt die Blattfeder 28 hingegen von unten an der Kontaktschiene 26 an.

Die Dimensionierungen und Anordnungen der Blattfeder 28, des Führungsteils 23 und der Kontaktschiene 26 sind derart gewählt, dass die Kontaktschiene 26 an sich immer von der Blattfeder 28 an den jeweils oberen Rand der beiden Öffnungen 24 gedrückt wird. Dieser Zustand ist in einer Zwischenstellung zwischen der ersten und der zweiten Stellung vorhanden. Dieses Nach-Oben-Drücken der Kontaktschiene 26 hat zur Folge, dass der bereits erwähnte Spielraum zwischen der Kontaktschiene 26 und den Öffnungen 24 des Führungsteils 23 unterhalb der Kontaktschiene 26 als Abstand 29 in Erscheinung tritt.

Wie bereits erläutert wurde, ist die Kontaktschiene 26 innerhalb der Öffnungen 24 des Führungsteils 23 hin- und herschiebbar. Dies ist in der Figur durch den Doppelpfeil 31 angedeutet. Im Ausführungsbeispiel der Figur ist die Kontaktschiene 26 in einer etwa horizontalen Richtung verschiebbar.

Gemäß der Figur sind die Sammelschiene 14 und die nach oben gedrückte Kontaktschiene 26 derart zueinander ausgerichtet, dass die Kontaktschiene 26, wenn sie in Richtung zu der Sammelschiene 14 und damit in ihre erste Stellung verschoben wird, nicht ohne weiteres an der Sammelschiene 14 zur Anlage kommt, sondern auf die Abwinklung 16 der Sammelschiene 14 auftrifft. Dies ist in der Figur dadurch kenntlich gemacht, dass die Kontaktschiene 26 und die Sammelschiene 14 im Bereich der Abwinklung 16 eine "gedachte" Überlappung 33 aufweisen. Es wird darauf hingewiesen, dass diese Überlappung tatsächlich natürlich nicht entstehen kann.

Statt dessen wird die Kontaktschiene 26 nach dem Auftreffen auf die Abwinklung 16 der Sammelschiene 14 etwas nach unten gedrückt, und zwar gerade so viel, dass die Überlappung 33 nicht mehr vorhanden ist und die Kontaktschiene 26 damit weiter verschoben werden kann.

Dieses vorgenannte Nach-Unten-Drücken der Kontaktschiene 26 wird durch den erläuterten Abstand 29 ermöglicht, der unterhalb der Kontaktschiene 26 vorhanden ist. Der Abstand 29 ist zu diesem Zweck etwas größer vorgesehen als die Überlappung 33.

Nach dem Auftreffen der Kontaktschiene 26 auf die Abwinklung 16 der Sammelschiene 14 wird die Kontaktschiene 26 somit ähnlich einer Wippe auf ihrer linken Seite gegen die Kraft der Blattfeder 28 nach unten gedrückt und damit von dem Rand der linken Öffnung 24 nach unten weggedrückt. Wird die Kontaktschiene 26 danach weiter in dieselbe Richtung verschoben, so kommt sie einerseits im wesentlichen flächig an der Sammelschiene 14 zur Anlage. Andererseits wird die Kontaktschiene 26 auf ihrer rechten Seite von der Blattfeder 28 gegen den oberen Rand der rechten Öffnung 24 des rechten Schenkels des Führungsteils 23 gedrückt.

Insgesamt entsteht damit eine elektrische Verbindung von der Sammelschiene 14 über die Kontaktschiene 26, das Führungsteil 23 und die Blattfeder 28 zu dem elektrischen Kontakt 21 des Spannungswandleranschlusses 19. Durch das erläuterte Andrücken der Kontaktschiene 26 gegen die Sammelschiene 14 und das Führungsteil 23 entsteht eine bleibende elektrische Verbindung über eine größere Fläche.

Der Spannungswandleranschluss 19 ist damit in der ersten Stellung elektrisch mit der Sammelschiene 14 verbunden.

In demjenigen Bereich des Sammelschiene 14, in dem die Kontaktschiene 26 zur Anlage kommt, ist zusätzlich ein Kontaktstück 35 vorgesehen, das mit der Sammelschiene 14 elektrisch verbunden, insbesondere verschraubt ist. Der Abstand dieses Kontaktstücks 35 von der Sammelschiene 14 entspricht dabei dem Querschnitt der Kontaktschiene 26 in derselben Richtung. Damit ist es möglich, dass durch ein weiteres Verschieben der Kontaktschiene 26 dieselbe zwischen dieses Kontaktstück 35 und die Sammelschiene 14 eintaucht und mit beiden Komponenten eine elektrische Verbindung bildet.

Zum Verschieben der Kontaktschiene 26 in Richtung des Doppelpfeils 31 ist im Innenraum 12 des Kabelabgangs 10 ein Betätigungshebel 37 vorgesehen. Dieser Betätigungshebel 37 besteht aus einem nicht-leitfähigen Material und ist im wesentlichen länglich ausgebildet und mit einem beispielsweise kreisförmigen Querschnitt versehen.

Der Betätigungshebel 37 ist um eine Achse 38 schwenkbar, die quer zu dem Doppelpfeil 31 und gemäß der Figur in etwa horizontaler Richtung ausgerichtet ist. Die Achse 38 kann aus einem nicht-leitfähigen Material bestehen, muss aber nicht. Der Betätigungshebel 37 ist durch eine Bohrung der Achse 38 hindurch gesteckt und mittels einer Schraube 39 fest mit der Achse 38 verbunden.

Die Kontaktschiene 26 weist eine Öffnung 41 auf, deren Querschnitt größer ist als der Querschnitt des Betätigungshebels 37, so dass das freie Ende des Betätigungshebels 37 in die Öffnung 41 hinein ragt und teilweise durch die Öffnung 41 hindurch tritt.

Ein Schwenken des Betätigungshebels 37 um die Achse 38 hat somit über den Eingriff des Betätigungshebels 37 in die Öffnung 41 der Kontaktschiene 26 ein Verschieben der Kontaktschiene 26 in Richtung des Doppelpfeils 31 zur Folge. Auf diese Weise kann die Kontaktschiene 26 in die erläuterte elektrische Verbindung mit der Sammelschiene 14 verschoben werden.

Wird die Kontaktschiene 14 hingegen in ihre entgegengesetzte Richtung, also in Richtung ihrer zweiten Stellung verschoben, so trifft sie auf zwei elektrisch leitfähige Kontaktstücke 43, 44, die an dem Gehäuse 11 des Kabelabgangs 10 gehalten und damit geerdet sind. Gemäß der Figur sind die beiden Kontaktstücke 43, 44 an der vertikalen Außenwand des Gehäuses 11 unterhalb des Prüfanschlusses 17 angeordnet. Die Kontaktstücke 43, 44 können mit dem Gehäuse verschweißt oder auch verschraubt sein.

Die Kontaktstücke 43, 44 sind halbkreisförmig ausgebildet und derart übereinander angeordnet, dass sie einen Abstand zueinander aufweisen, der dem Querschnitt der Kontaktschiene 26 in derselben Richtung entspricht.

Wird die Kontaktschiene 26 in Richtung zu den Kontaktstücken 43, 44 verschoben, so kommt sie nicht ohne weiteres zwischen den halbkreisförmigen Ausbildungen der Kontaktstücke 43, 44 zur Anlage, sondern trifft auf das obere Kontaktstück 43 auf. Es ist somit hinsichtlich der Kontaktschiene 26 und des oberen Kontaktstücks 43 eine "gedachte" Überlappung vorhanden wie dies bereits erläutert worden ist.

Nach dem Auftreffen auf die halbkreisförmige Ausbildung des Kontaktstücks 43 wird die Kontaktschiene 26 etwas nach unten gedrückt, und zwar gerade so viel, dass die vorgenannte Überlappung nicht mehr vorhanden ist und die Kontaktschiene 26 damit weiter verschoben werden kann.

Dieses Nach-Unten-Drücken der Kontaktschiene 26 wird durch den erläuterten Spielraum ermöglicht, der zwischen der Kontaktschiene 26 und dem oberen Rand der Querschnitte der beiden Öffnungen 24 des Führungsteils 23 vorhanden ist.

Nach dem Auftreffen der Kontaktschiene 26 auf die halbkreisförmige Ausbildung des Kontaktstücks 43 wird die Kontaktschiene 26 somit wiederum ähnlich einer Wippe auf ihrer rechten Seite gegen die Kraft der Blattfeder 28 nach unten gedrückt. Wird die Kontaktschiene 26 danach weiter in dieselbe Richtung verschoben, so kommt sie einerseits im wesentlichen flächig an der halbkreisförmigen Ausbildung des Kontaktstücks 43 zur Anlage. Andererseits wird die Kontaktschiene 26 auf ihrer linken Seite von der Blattfeder 28 gegen den oberen Rand des linken Schenkels des Führungsteils 23 gedrückt.

Weiterhin kommt die Kontaktschiene 26 durch eine weiteres Verschieben auch an der halbkreisförmigen Ausbildung des unteren Kontaktstücks 44 zur Anlage.

Insgesamt entsteht damit eine elektrische Verbindung von dem geerdeten Gehäuse 11 des Kabelabgangs 10 über die beiden Kontaktstücke 43, 44, die Kontaktschiene 26, das Führungsteil 23 und die Blattfeder 28 zu dem elektrischen Kontakt 21 des Spannungswandleranschlusses 19. Durch das erläuterte Andrücken der Kontaktschiene 26 gegen das obere Kontaktstück 43 und das Führungsteil 23 entsteht dabei eine bleibende elektrische Verbindung über eine größere Fläche.

Der Spannungswandleranschluss 19 ist damit in der zweiten Stellung elektrisch geerdet.

In nicht-dargestellter Weise ist die Achse 38 durch eine Wand des Gehäuses 11 aus dem Innenraum 12 des Kabelabgangs 10 heraus nach außen geführt. Dort ist an der Achse 38 ein nicht-dargestellter Bedienhebel drehfest befestigt, der von einer Bedienperson betätigt werden kann. Ist der Betätigungshebel 37 ebenfalls drehfest mit der Achse 38 verbunden, so führt ein Schwenken dieses letztgenannten Bedienhebels zu einem Schwenken des Betätigungshebels 37. Durch das Eingreifen des Betätigungshebels 37 in die Öffnung 41 der Kontaktschiene 26 wird dann die Kontaktschiene 26 in Richtung des Doppelpfeils 31 hin- und hergeschoben.

Weiterhin kann außerhalb des Kabelabgangs 10 dem erläuterten Bedienhebel eine Vorrichtung, beispielsweise eine Kulisse oder dergleichen, zugeordnet sein, mit deren Hilfe die möglichen Stellungen des Bedienhebels festgelegt werden können. So können beispielsweise eine EIN-Stellung der Kontaktschiene 26, die im wesentlichen der ersten Stellung entspricht, und bei der der Spannungswandleranschluss 19 mit der Sammelschiene 14 elektrisch verbunden ist, sowie eine AUS-Stellung der Kontaktschiene 26, die im wesentlichen der zweiten Stellung entspricht und bei der der Spannungswandleranschluss 19 elektrisch geerdet ist, mit Hilfe eines federnden, in eine Bohrung einrastbaren Stiftes verriegelt werden.

## Patentansprüche

1. Elektrische Schalteinheit für eine elektrische Schaltanlage insbesondere für den Bereich der Mittelspannung, mit einem an einem Gehäuse (11) gehaltenen Spannungswandleranschluss (19), der mit einer in dem Gehäuse (11) untergebrachten Sammelschiene (14) verbindbar oder nach Erde schaltbar ist, wobei eine Kontaktschiene (26) vorgesehen ist, die in einem mit dem Spannungswandleranschluss (19) verbundenen Führungsteil (23) geführt ist, und wobei die Kontaktschiene (26) in eine erste Stellung, in der sie mit der Sammelschiene (14) verbunden ist, und in eine zweite Stellung, in der sie mit dem geerdeten Gehäuse (11) verbunden ist, verschiebbar ist, **dadurch gekennzeichnet, dass** das Führungsteil (23) mit einem Verbindungssteg flächig an einem elektrischen Kontakt (21) des Spannungswandleranschlusses (19) anliegt.

2. Schalteinheit nach Anspruch 1, wobei das Führungsteil (23) zwei Öffnungen (24) aufweist, deren Querschnitte im wesentlichen dem Querschnitt der Kontaktschiene (26) entsprechen, so dass die Kontaktschiene (26) in den beiden Öffnungen (24) verschiebbar ist.

3. Schalteinheit nach Anspruch 2, wobei die Querschnitte der beiden Öffnungen (24) zumindest teilweise etwas größer ausgestaltet sind als dies für eine Verschiebbarkeit der Kontaktschiene (26) an sich erforderlich ist, so dass ein Spielraum zwischen der Kontaktschiene (26) und den Öffnungen (24) entsteht.

4. Schalteinheit nach Anspruch 3, wobei die Kontaktschiene (26) von einer Blattfeder (28) gegen die Ränder der Öffnungen (24) gedrückt wird.

5. Schalteinheit nach Anspruch 4, wobei die Kontaktschiene (26) in der ersten Stellung von der Sammelschiene (14) gegen die Kraft der Blattfeder (28) von einem der beiden Ränder der Öffnungen (24) weggedrückt wird.

6. Schalteinheit nach Anspruch 5, wobei die Kontaktschiene (26) in der zweiten Stellung von einem an dem Gehäuse (11) gehaltenen Kontaktstück (43) gegen die Kraft der Blattfeder (28) von dem anderen der beiden Ränder der Öffnungen (24) weggedrückt wird.

7. Schalteinheit nach Anspruch 5 oder 6, wobei der Spielraum zwischen der Kontaktschiene (26) und den Öffnungen (24) etwas größer ist als das Wegdrücken der Kontaktschiene (26) von den Rändern der Öffnungen (24).

8. Schalteinheit nach einem der vorstehenden Ansprüche, wobei die Kontaktschiene (26) eine Öffnung (41) aufweist, durch die ein Betätigungshebel (37) hindurch ragt, der um eine Achse (38) schwenkbar ist.

9. Schalteinheit nach Anspruch 8, wobei die Achse (38) aus dem Gehäuse (11) herausgeführt ist, wobei außerhalb des Gehäuses (11) ein Bedienhebel drehfest mit der Achse (38) verbunden ist, und wobei der Betätigungshebel (37) drehfest mit der Achse (38) verbunden ist.

10. Schalteinheit nach einem der Ansprüche 8 oder 9, wobei der Betätigungshebel (37) aus einem nicht-leitfähigem Material besteht.

11. Schalteinheit nach einem der vorstehenden Ansprüche, wobei das Gehäuse (11) gasdicht gekapselt ist.

## Claims

1. An electrical switching unit for an electrical switchgear, in particular for the medium voltage range, having a voltage transformer terminal (19) retained on a housing (11), which terminal is connectable to a bus bar (14), accommodated in the housing (11), or is switching to ground, wherein a contact rail (26) is provided, which is guided in a guide part (23) connected to the voltage transformer terminal (19), and wherein the contact rail (26) is displaceable into a first position, in which it is connected to the bus bar (14), and into a second position, in which it is connected to the grounded housing (11), **characterized in that** the guide part (23) is in two-dimensional contact with an electrical contact (21) of the voltage transformer terminal (19) by means of a connector.

2. The switching unit of claim 1, wherein the guide part (23) has two openings (24), the cross sections of which are essentially equivalent to the cross section of the contact rail (26), so that the contact rail (26) is displaceable in both openings (24.

3. The switching unit of claim 2, wherein the cross sections of the two openings (24) are embodied at least in part as somewhat larger than intrinsically necessary for displaceability of the contact rail (26), so that clearance between the contact rail (26) and the openings (24) is created.

4. The switching unit of claim 3, wherein the contact rail (26) is pressed by a leaf spring (28) against the edges of the openings (24).

5. The switching unit of claim 4, wherein the contact rail (26), in the first position, is pressed by the bus bar (14) away from one of the two edges of the openings (24), counter to the force of the leaf spring (28).

6. The switching unit of claim 5, wherein the contact rail (26), in the second position, is pressed by a contact piece (43), retained on the housing (11), away from the other of the two edges of the openings (24), counter to the force of the leaf spring (28).

7. The switching unit of claim 5 or 6, wherein the clearance between the contact rail (26) and the openings (24) is somewhat greater than the distance by which the contact rail (26) is pressed away from the edges of the openings (24).

8. The switching unit of one of the foregoing claims, wherein the contact rail (26) has an opening (41), through which an actuation lever (37) protrudes, which lever is pivotable about a shaft (38).

9. The switching unit of claim 8, wherein the shaft (38) is extended out of the housing (11), and outside the housing (11) an operating lever is connected to the shaft (38) in a manner fixed against relative rotation, and wherein the actuation lever (37) is connected to the shaft (38) in a manner fixed against relative rotation.

10. The switching unit of one of claims 8 or 9, wherein the actuation lever (37) comprises a nonconductive material.

11. The switching unit of one of the foregoing claims, wherein the housing (11) is encapsulated in gas-tight fashion.

## Revendications

1. Unité de commutation électrique pour un appareillage électrique de commutation, en particulier pour le domaine de la moyenne tension, comprenant une connexion de transformateur de tension (19) qui est retenue sur un boîtier (11) et qui peut être reliée à une barre collectrice (14) logée à l'intérieur dudit boîtier (11) ou peut être connectée à la terre, dans laquelle un rail de contact (26) est prévu qui est guidé dans une partie de guidage (23) reliée à la connexion de transformateur de tension (19), et dans laquelle ledit rail de contact (26) peut être déplacé dans une première position dans laquelle il est relié à la barre collectrice (14) et dans une deuxième position dans laquelle il est relié au boîtier (11) mis à la terre, **caractérisée par le fait que** ladite partie de guidage (23) s'applique par une entretoise de liaison de manière plane contre un contact électrique (21) de la connexion de transformateur de tension (19).

2. Unité de commutation selon la revendication 1, dans laquelle la partie de guidage (23) présente deux ouvertures (24) dont les sections transversales correspondent pour l'essentiel à la section transversale du rail de contact (26) de sorte que le rail de contact (26) peut être déplacé dans les deux ouvertures (24).

3. Unité de commutation selon la revendication 2, dans laquelle les sections transversales des deux ouvertures (24) sont configurées de manière à être, au moins en partie, un peu plus grandes que ceci est nécessaire en soi à un coulissement du rail de contact (26) de sorte qu'un jeu est créé entre le rail de contact (26) et les ouvertures (24).

4. Unité de commutation selon la revendication 3, dans laquelle le rail de contact (26) est plaqué par un ressort à lame (28) contre les bords des ouvertures (24).

5. Unité de commutation selon la revendication 4, dans laquelle, dans la première position, le rail de contact (26) est poussé par la barre collectrice (14), contre la force du ressort à lame (28), dans la direction opposée à l'un des deux bords des ouvertures (24).

6. Unité de commutation selon la revendication 5, dans laquelle, dans la deuxième position, le rail de contact (26) est poussé par une pièce de contact (43) retenue sur ledit boîtier (11), contre la force du ressort à lame (28), dans la direction opposée à l'autre des deux bords des ouvertures (24).

7. Unité de commutation selon la revendication 5 ou 6, dans laquelle le jeu entre le rail de contact (26) et les ouvertures (24) est légèrement plus grand que l'action de pousser le rail de contact (26) dans la direction opposée aux bords des ouvertures (24).

8. Unité de commutation selon l'une quelconque des revendications précédentes, dans laquelle le rail de contact (26) présente une ouverture (41) à travers laquelle un levier de commande (37) fait saillie qui peut pivoter autour d'un axe (38).

9. Unité de commutation selon la revendication 8, dans laquelle ledit axe (38) est mené hors du boîtier (11), un levier de manoeuvre étant relié, à l'extérieur du boîtier (11), de manière solidaire en rotation à l'axe (38), et dans laquelle ledit levier de commande (37) est relié de manière solidaire en rotation à l'axe (38).

10. Unité de commutation selon l'une quelconque des revendications 8 ou 9, dans laquelle le levier de commande (37) est réalisé dans un matériau non conducteur.

11. Unité de commutation selon l'une quelconque des revendications précédentes, dans laquelle le boîtier (11) est encapsulé de manière étanche aux gaz.
